# EUROPÄISCHE PATENTSCHRIFT

(11) **EP 2 112 357 B1**
(45) Veröffentlichungstag und Bekanntmachung des Hinweises auf die Patenterteilung: **12.06.2019**
(21) Anmeldenummer: 09005500.5
(22) Anmeldetag: 20.04.2009
(51) Int. Cl.: F02D 41/14, F02D 29/00, A01D 41/127, F02D 41/24, F02D 31/00

(54) **Betriebsverfahren für einen Verbrennungsmotor**
Operating method for an internal combustion engine
Procédé de fonctionnement pour un moteur à combustion

(30) Priorität: 23.04.2008 DE 102008020497
(43) Veröffentlichungstag der Anmeldung: 28.10.2009
(73) Patentinhaber: CLAAS Selbstfahrende Erntemaschinen GmbH, 33428 Harsewinkel (DE)
(72) Erfinder: Twiefel, Herbert, 33428 Harsewinkel (DE); Hugenroth, Ludger, Dipl.-Ing, 48346 Ostbevern (DE); Isfort, Heinrich, Dipl.-Ing, 48249 Dülmen (DE)
(74) Vertreter: CLAAS Gruppe

(56) Entgegenhaltungen:
- DE-A1- 3 913 523
- US-A- 6 165 102
- US-A1- 2004 088 103
- US-A1- 2004 266 285
- US-B1- 6 898 512

## Beschreibung

Die vorliegende Erfindung betrifft ein Betriebsverfahren für einen Verbrennungsmotor, insbesondere für einen leistungsstarken Dieselmotor, zum Einsatz in landwirtschaftlichen Maschinen.

Die Motoren von selbstfahrenden landwirtschaftlichen Maschinen wie etwa Feldhäckslern, Mähdreschern und dergleichen werden herkömmlicherweise im Feldeinsatz dauernd mit voller Leistung betrieben, d.h. der durch Drehzahl und Leistung definierte Arbeitspunkt des Motors bewegt sich auf einer Kennlinie, die einen ansteigenden Ast bei niedrigen Drehzahlen, in dem die Leistung mit der Drehzahl zunimmt, und einem abfallenden Ast, mit abnehmender Leistung, bei hohen Drehzahlen aufweist. Es ist leicht nachvollziehbar, dass die Leistung, die beispielsweise das Häckselwerk eines Feldhäckslers vom Motor abfordert, proportional zum Erntegutdurchsatz und infolge dessen proportional zur Fahrgeschwindigkeit und zur Dichte des Ernteguts auf dem bearbeiteten Feld ist, während die für die Fortbewegung des Feldhäckslers benötigte Leistung im wesentlichen immer zu seiner Geschwindigkeit proportional ist. Der Fahrer hat die Möglichkeit, über die Verteilung der Motorleistung auf Fahrwerk und Häckselwerk die Fahrgeschwindigkeit des Feldhäckslers zu beeinflussen.

Wenn bei niedriger Geschwindigkeit der Durchsatz an Erntegut gering ist, ist die abgenommene Leistung gering, und Motordrehzahl und Fahrgeschwindigkeit steigen an, bis ein stationärer Wert auf dem abfallenden Ast der Motorkennlinie erricht ist, an dem sich die Ausgangsleistung des Motors und die von Fahrwerk und Häckselwerk zusammen abgefragte Leistung die Waage halten. Je höher diese Drehzahl ist, umso höher ist das Verhältnis zwischen verbrauchtem Kraftstoff und geleisteter Arbeit, das heißt umso unwirtschaftlicher ist der Betrieb. Der Fahrer muss daher bemüht sein, die Leistung so auf Fahrwerk und Häckselwerk zu verteilen, dass die sich einstellende Drehzahl in einem wirtschaftlichen Bereich, vorzugsweise auf dem abfallenden Ast nahe am Scheitel der Motorkennlinie, liegt. Dies ist jedoch herkömmlicherweise nicht möglich, wenn zum Beispiel äußere Randbedingungen die Entscheidungsfreiheit des Fahrers einschränken, etwa weil die Geschwindigkeit des Feldhäckslers gleich derjenigen eines Begleitfahrzeuges gehalten werden muss, in das das gehäckselte Erntegut kontinuierlich übergeladen wird, oder wenn die benötigte Leistung schwankt und der Fahrer nicht nachregelt.

Aus US 6 156 102 A ist ein Antriebssystem mit einem Drehmomentwandler bekannt, das beim Anfahren und beim Niedriggeschwindigkeitsbetrieb einen Betriebsmodus unterstützt, in welchem ein Pumpenrad ein Turbinenrad über zwischen ihnen zirkulierende Flüssigkeit antreibt. Dieser Betriebsmodus ist nicht energieeffizient und deswegen nicht für Dauerbetrieb und auch nicht für Betrieb bei hoher Leistung geeignet.

US2004/0266285 A1 befasst sich mit der Drehzahlregelung eines Bootsmotors, dessen Last stark schwankt, je nachdem ob eine von dem Motor angetriebene Schraube sich im Wasser oder außerhalb befindet.

US 6 898 512 B1 betrifft ein Prüfverfahren für eine elektronische Abschaltvorrichtung eines Dieselmotors. Um diese zu testen, müssen Bedingungen wie etwa hohe Drehzahl bei geringer Leistung, in denen sie greifen muss, versuchsweise realisiert werden; ein Dauerbetrieb bei diesen Bedingungen soll jedoch durch die Abschaltvorrichtung gerade vermieden werden.

Aufgabe der vorliegenden Erfindung ist, ein Betriebsverfahren für einen Verbrennungsmotor einer selbstfahrenden landwirtschaftlichen Maschine zu schaffen, das auch unter ungünstigen Randbedingungen einen wirtschaftlichen, kraftstoffsparenden Betrieb ermöglicht.

Die Aufgabe wird gelöst, indem bei einem Verbrennungsmotor einer selbstfahrenden landwirtschaftlichen Maschine, die einen Fahrantrieb und ein Häckselwerk umfasst, -wobei die Leistung des Verbrennungsmotors über einen Steuerparameter bestimmbar ist, wobei eine Motorkennlinie, die bei einem maximaler Leistung entsprechenden Wert des Steuerparameters die Leistung als Funktion der Motordrehzahl beschreibt, einen ansteigenden Ast bei niedrigen Drehzahlen und einen abfallenden Ast bei hohen Drehzahlen aufweist, sich ein Arbeitspunkt am Schnittpunkt der Motorkennlinie mit einer für die Leistungsaufnahme von Antrieb und Häckselwerk repräsentativen Geraden ergibt, wenn der Motor mit Volllast arbeitet, bei einer lokal verringerten Bestandsdichte des Erntegutes weniger Leistung im Häckselwerk erforderlich ist, so dass der Leistungsbedarf abnimmt, die Steigung der Geraden abnimmt, und sich der Arbeitspunkt zu höheren Drehzahlen verschiebt, und in dem Fall, dass beim Betrieb des Motors bei dem der maximalen Leistung entsprechenden Wert des Steuerparameters die Drehzahl einen ersten oberen Grenzwert überschreitet, ein erster einer von Null verschiedenen reduzierten Leistung entsprechender Wert des Steuerparameters eingestellt wird.

Vorzugsweise ist dieser erste einer reduzierten Leistung entsprechende Wert des Steuerparameters als Funktion der Motordrehzahl vorgegeben, und zwar derart, dass durch Ansteuern des Motors mit dem jeweils der Drehzahl entsprechenden ersten Wert eine Abnahme der Motorleistung bei steigender Drehzahl realisiert wird. So lassen sich Drehzahlschwankungen, die aus Schwankungen des Leistungsbedarfs der von dem Motor angetriebenen Aggregate resultieren, beziehungsweise Geschwindigkeitsschwankungen eines von dem Motor angetriebenen Fahrzeugs gering halten, und die Gefahr, dass der Motor durch einen plötzlich zunehmenden Leistungsbedarf abgewürgt wird, ist gering.

Umgekehrt wird vorzugsweise, wenn im Betrieb mit dem ersten Wert des Steuerparameters ein erster unterer Grenzwert der Drehzahl unterschritten wird, der der maximalen Leistung entsprechende Wert des Steuerparameters wieder eingestellt, so dass eine hohe Motorleistung wieder zur Verfügung steht, sobald sie benötigt wird.

Vorzugsweise ist der Steuerparameter zwischen mehreren Stufen umschaltbar, d.h. wenn im Betrieb mit dem n-ten Wert des Steuerparameters, wobei n jeden ganzzahligen Wert zwischen 1 und einer Obergrenze annehmen kann, ein n+1-ter oberer Grenzwert der Drehzahl überschritten wird, wird zweckmäßigerweise ein n+1-ter einer reduzierten Leistung entsprechender Wert des Steuerparameters eingestellt, wobei die dem n+1-ten Wert des Steuerparameters entsprechende Leistung niedriger als die dem n-ten Wert entsprechende ist.

Auch hier wird zweckmäßigerweise, wenn im Betrieb mit dem n+1-ten Wert des Steuerparameters ein n+1-ter unterer Grenzwert der Drehzahl unterschritten wird, der n-te einer reduzierten Leistung entsprechende Wert des Steuerparameters wieder eingestellt.

Um durch die Veränderung des Steuerparameters eine signifikante, zu einer deutlichen Reduzierung des Kraftstoffverbrauchs führende Drehzahlverringerung zu erreichen, sollte bei vorgegebener Motordrehzahl die Differenz zwischen der Motorleistung bei dem der maximalen Leistung entsprechendem Wert des Steuerparameters und beim ersten reduzierter Leistung entsprechendem Wert und/oder die Differenz zwischen der Motorleistung beim n-ten Wert und beim n+1-ten Wert des Steuerparameters wenigstens 10 kW oder wenigstens 2% der Motorleistung am Scheitelpunkt der Motorkennlinie betragen.

Um ein unnötig häufiges Umschalten des Steuerparameters zu vermeiden, sollte der n-te untere Grenzwert maximal 90% des n-ten oberen Grenzwertes betragen.

Als Steuerparameter kann die zugeführte Menge eines Betriebsmittels wie etwa Kraftstoff oder Frischluft dienen; vorzugsweise ist es das von dem Motor erzeugte Drehmoment.

Eine Steuerung mit dem Drehmoment als Steuerparameter ist besonders einfach realisierbar bei Verwendung eines elektronischen, nach dem standardisierten Protokoll SAE J1939 ansteuerbaren Motors, da dieses Protokoll das vom Motor abgegebene Drehmoment oder eine Obergrenze des vom Motor abgebbaren Drehmoments als einen Steuerparameter vorsieht.

Gegenstand der Erfindung ist ferner ein Steuergerät für einen Verbrennungsmotor, das eingerichtet ist, das oben definierte Verfahren auszuführen, sowie eine landwirtschaftliche Maschine mit einem Verbrennungsmotor und einem solchen Steuergerät.

Das Steuergerät kann insbesondere in Form eines geeignet programmierten Mikroprozessors oder Mikroprozessorsystems implementiert sein; deswegen ist Erfindungsgegenstand ferner ein Computerprogramm mit Programmcode-Mitteln zum Ausführen des oben beschriebenen Verfahrens auf einem Mikroprozessor eines Motorsteuergeräts sowie ein computerlesbarer Datenträger, auf dem Programmanweisungen aufgezeichnet sind, die einen Computer befähigen, das oben beschriebene Verfahren auszuführen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Figur 1: eine schematische Darstellung eines Feldhäckslers;
- Figur 2: ein Flussdiagramm des erfindungsgemäßen Verfahrens; und
- Figur 3: ein Kennliniendiagramm zur Veranschaulichung der Wirkung des Verfahrens.

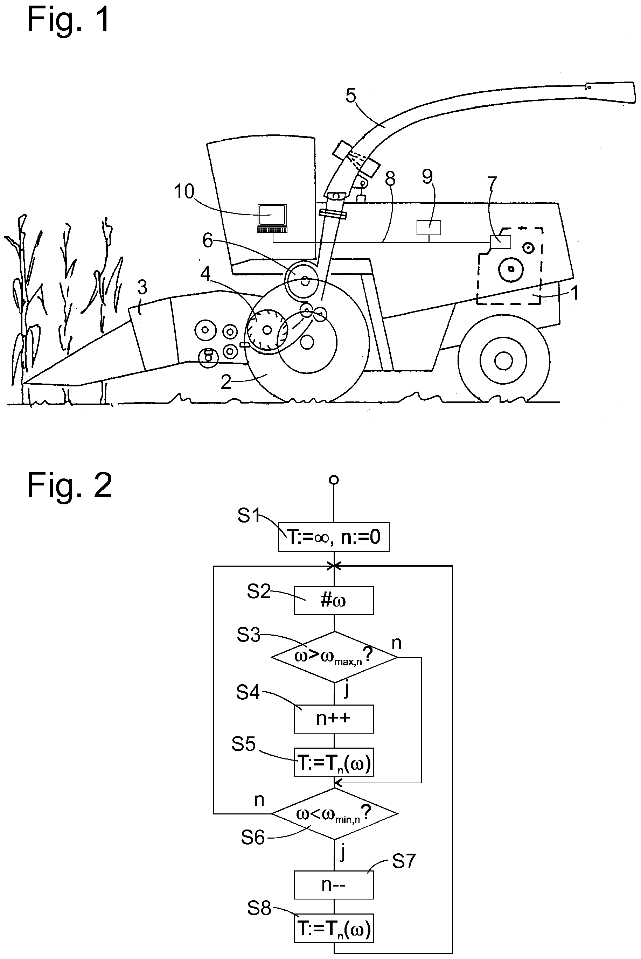

Figur 1 zeigt als Anwendungsbeispiel der vorliegenden Erfindung eine schematische Darstellung eines selbstfahrenden Feldhäckslers. Ein Dieselmotor 1 treibt über ein an sich bekanntes, nicht dargestelltes Verteilergetriebe einerseits ein Fahrwerk 2 und andererseits Messer eines Erntevorsatzes 3, eine Häckseltrommel 4 zum Zerkleinern des von dem Erntevorsatz 3 aufgenommenen Pflanzenmaterials und einen Nachbeschleuniger 6 an, der dem gehäckselten Pflanzenmaterial die notwendige Geschwindigkeit verleiht, um einen Auswurfkrümmer 5 zu durchlaufen und in ein (nicht dargestelltes) Begleitfahrzeug übergeladen zu werden.

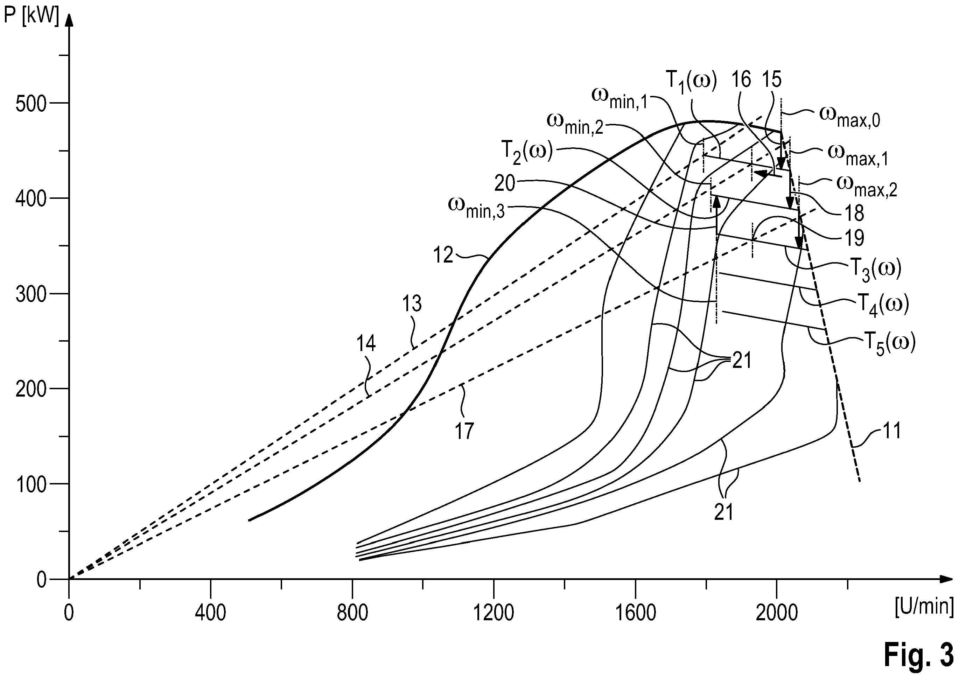

Der Dieselmotor 1 ist über eine SAE J1939-Schnittstelle 7 an einen CAN-Bus 8 angeschlossen, über den diverse elektronische Steuereinrichtungen wie etwa ein Steuerprozessor 9 und eine Benutzerschnittstelle 10 in der Fahrerkabine miteinander kommunizieren. Das Protokoll SAEJ1939 sieht vor, dass der Motor 1 über 8 Byte lange Befehlswörter gesteuert wird, die die Auswahl zwischen verschiedenen Steuermodi und die Vorgabe von Soll- und Grenzwerten der Drehzahl beziehungsweise des Drehmoments des Motors erlauben. Die SAE-Schnittstelle 7 dosiert den dem Motor 1 zugeführten Kraftstoff entsprechend einer über den Bus 8 empfangenen Sollwertvorgabe. Falls eine Sollwertvorgabe zu einer unzulässig hohen Motordrehzahl führen würde, nimmt sie eine Drehzahlbegrenzung vor und realisiert so eine Abregelkennlinie 11, wie in Figur 3 gezeigt.

Ein von dem Steuerprozessor 9 ausgeführtes Verfahren zur Ansteuerung des Motors 1 ist in Figur 2 als ein schematisches Flussdiagramm dargestellt. Jeweils mit dem Start des Motors 1 wird in Schritt S1 ein an den Motor 1 zu übermittelnder Drehmoment-Begrenzungswert T auf unendlich gesetzt, das heißt eine Drehmomentbegrenzung soll nicht stattfinden, und ein Zählindex n wird auf 0 gesetzt. In Schritt S2 wird die Drehzahl ω des Motors 1 erfasst, und in Schritt S3 wird geprüft, ob der erfasste Wert einen für den aktuellen Wert des Zählindex n spezifischen oberen Grenzwert ω_{max,n} überschreitet. Ist dies nicht der Fall, so springt das Verfahren zu Schritt S6; bei Überschreitung des Grenzwerts hingegen wird in Schritt S4 der Zählindex n inkrementiert, und ein Drehmoment-Begrenzungswert T wird in Schritt S5 als eine für den Zählindex n spezifische Funktion Tₙ(ω) der Drehzahl ω festgelegt und bei der weiteren Ansteuerung des Motors 1 berücksichtigt.

Die Funktionen Tₙ sind abnehmende Funktionen der Drehzahl ω, wobei für alle n>2 die Beziehung T_{n(ω)}<T_{n-1(ω)} erfüllt ist.

Anschließend wird in Schritt S6 die erfasste Drehzahl ω mit einem unteren Grenzwert ω_{min,n} verglichen. Wenn dieser Grenzwert nicht unterschritten ist, kehrt das Verfahren zu Schritt S2 zurück. Für n=0 ist der Grenzwert ω_{min,0} auf 0 gesetzt, so dass die Bedingung des Schritts S6 nur für n>0 erfüllbar ist. Wenn sie erfüllt ist, wird im Schritt S7 der Zählindex n dekrementiert, und in Schritt S8 wird eine neue Drehmoment-Obergrenze T=Tₙ(ω) entsprechend dem neuen Wert von n festgelegt, wobei T₀(ω)=∞ ist.

Für jeden unteren Grenzwert mit n≥1 gilt: ω_{min,n}<0,9 ω_{max,n} und ω_{min,n}<0,9 ω_{max,n-1}. Außerdem gilt ω_{max,n}>ω_{max,n-1} und ω_{min,n}>ω_{min,n-1}.

Die Auswirkungen der Steuerung gemäß dem Verfahren der Figur 2 werden anhand des Diagramms der Figur 3 erläutert.

In dem Diagramm der Figur 3 ist die Motordrehzahl ω auf der Abszisse und die Motorleistung P auf der Ordinate aufgetragen. Eine Kennlinie, die den Zusammenhang zwischen Drehzahl und Leistung bei Volllast des Motors 1 beschreibt, ist mit 12 bezeichnet. Diese Volllast-Kennlinie 12 hat einen Scheitelpunkt bei ca. 1.800 U/min, bei 2.000 U/min kreuzt sie die Abregelkennlinie 11.

Zur Erläuterung des Verhaltens des Motors und seiner Steuerung kann davon ausgegangen werden, dass beim Abernten einer Fläche mit konstanter Bestandsdichte die für den Fahrantrieb und das Häckselwerk benötigte Antriebsleistung zur Fahrzeuggeschwindigkeit und damit zur Drehzahl linear proportional ist. Das heißt wenn der Motor mit Volllast arbeitet, ergibt sich ein Arbeitspunkt am Schnittpunkt der Volllast-Kennlinie 12 mit einer für die Leistungsaufnahme von Antrieb und Häckselwerk repräsentativen Geraden 13. Wenn der Leistungsbedarf abnimmt, zum Beispiel weil eine lokal verringerte Bestandsdichte des Ernteguts weniger Leistung im Häckselwerk erfordert, so nimmt die Steigung der Geraden 13 ab, es ergibt sich z.B. der mit 14 bezeichnete Verlauf, und der Arbeitspunkt verschiebt sich zu höheren Drehzahlen. Der Drehzahlgrenzwert ω_{max,0} liegt am Kreuzungspunkt von Volllast-Kennlinie 12 und Abregel-Kennlinie 11 oder geringfügig darunter. Wird diese Drehzahl ω_{max,0} erreicht oder überschritten, so begrenzt der Steuerprozessor 9 das Drehmoment des Motors 1 auf T₁ (ω_{max,0}), und die Motorleistung nimmt ab, wie durch einen Pfeil 15 angedeutet. Die Motorleistung ist nun geringer als zum Aufrechterhalten der Drehzahl ω_{max,0} erforderlich. Die Drehzahl ω nimmt ab, und der Arbeitspunkt wandert auf dem mit T₁ bezeichneten Kennlinien-Segment (Pfeil 16), bis er am Kreuzungspunkt mit der Geraden 14 wieder einen stationären Wert erreicht.

Im Falle einer noch stärkeren Abnahme der vom Häcksler abgenommenen Leistung, zum Beispiel entsprechend der Geraden 17, nimmt auch nach dem Übergang zum Kennlinien-Segment T₁ die Drehzahl weiter zu, und überschreitet schließlich den Grenzwert ω_{max,1}. Hier reduziert der Steuerprozessor 9 das maximale Drehmoment des Motors 1 ein weiteres Mal, wie durch einen Pfeil 18 dargestellt. Die Drehzahl wächst dennoch weiter und überschreitet auch den Grenzwert ω_{max,2}, worauf hin der Steuerprozessor 9 das Drehmoment erneut, diesmal auf T₃(ω_{max,2}), reduziert. Das Kennlinien-Segment T₃(ω) kreuzt die Gerade 17, so dass auf ihm wieder ein stationärer Arbeitspunkt 19 erreicht wird.

Wenn die vom Häckselwerk abgefragte Leistung wieder zunimmt, verschiebt sich der Arbeitspunkt zu niedrigeren Drehzahlen, und sobald die Drehzahl auf ω_{min,3} abfällt, schaltet der Steuerprozessor 9 wieder auf das Kennlinien-Segment T₂(ω) um, wie durch einen Pfeil 20 angedeutet. Mit zunehmendem Leistungsbedarf kehrt der Motor 1 schließlich zum Betrieb auf der Volllast-Kennlinie 12 zurück.

Während beim Herunterschalten der Leistung entsprechend dem Pfeil 18 eine lange Reaktionszeit des Steuerprozessors 9 hinnehmbar ist und sogar wünschenswert sein kann, um eine Leistungsumschaltung aufgrund kurzzeitiger zufälliger Schwankungen der Motorlast zu vermeiden, sollte das Umschalten auf eine höhere Leistungsstufe 20 mit einer möglichst kurzen Reaktionszeit stattfinden, um ein unerwünschtes Absacken der Drehzahl, das im Extremfall zum Motorstillstand führen könnte, auszuschließen.

In der Fig. 3 sind insgesamt fünf Kennlinien-Segmente Tₙ(ω) dargestellt, die Zahl der Segmente kann selbstverständlich auch größer sein. Die Dichte, mit der die Segmente gestaffelt sind, oder, was gleichbedeutend ist, die mittlere Leistungsdifferenz zwischen ihnen ist unter anderem durch die Anforderung bestimmt, dass, um eine Umschalthysterese zwischen den Kennnlinien-Segmenten zu implementieren, eine durch den Koordinatenursprung verlaufende Gerade, die eines der Segmente nahe an seinem oberen oder unteren Grenzwert kreuzt, auch ein benachbartes Segment kreuzen sollte. Die optimale Anzahl der Kennliniensegmente ist daher sowohl von ihrer Länge (der Differenz zwischen oberem und unterem Grenzwert) als auch von ihrem Gefälle abhängig.

Eine Schar dünner punktierter Linien 21 in dem Diagramm der Figur 3 bezeichnet jeweils Motorzustände mit gleichem spezifischem Kraftstoffverbrauch, wobei die Kraftstoffverbrauchswerte, denen die Linien entsprechen, im Diagramm von links nach rechts und von oben nach unten zunehmen. Die Kennlinien-Segmente Tₙ(ω) verlaufen quer zu den Verbrauchs-Kennlinien 21, so dass immer dann, wenn durch Übergang auf ein Kennlinien-Segment mit stärkerer Drehmoment-Begrenzung die Drehzahl reduziert wird, auch der spezifische Kraftstoffverbrauch deutlich abnimmt. Wie man aus Fig. 3 leicht sieht, ist die Kraftstoffeinsparung um so signifikanter, je stärker die aus der Verringerung des Drehmomentbegrenzungswerts resultierende Drehzahlverminderung ist. Daher sollten die Kennliniensegmente Tₙ(ω) nicht zu eng gestaffelt sein; eine Leistungsdifferenz zwischen zwei benachbarten Segmenten sollte wenigstens 2% der maximalen Leistung des Motors oder 10 kW betragen. In der in Fig. 3 dargestellten Ausgestaltung beträgt die Leistungsdifferenz zwischen zwei benachbarten Segmenten ca. 40 -50 kW.

### Bezugszeichen

- 1.: Dieselmotor
- 2.: Fahrwerk
- 3.: Erntevorsatz
- 4.: Häckseltrommel
- 5.: Auswurfkrümmer
- 6.: Nachbeschleuniger
- 7.: SAE-Schnittstelle
- 8.: CAN-Bus
- 9.: Steuerprozessor
- 10.: Benutzerschnittstelle
- 11.: Abregelkennlinie
- 12.: Volllast-Kennlinie
- 13.: Gerade
- 14.: Gerade
- 15.: Pfeil
- 16.: Pfeil
- 17.: Gerade
- 18.: Pfeil
- 19.: Arbeitspunkt
- 20.: Pfeil
- 21.: Linie
- Tₙ(ω): Kennlinien-Segment

## Patentansprüche

1. Verfahren zum Betreiben eines Verbrennungsmotors (1) einer selbstfahrenden landwirtschaftlichen Maschine, die einen Fahrantrieb und ein Häckselwerk umfasst, wobei die Leistung des Verbrennungsmotors (1) über einen Steuerparameter (T) bestimmbar ist, wobei eine Motorkennlinie (11,12), die bei einem maximaler Leistung entsprechenden Wert des Steuerparameters (T) die Leistung (P) als Funktion der Motordrehzahl (ω) spezifiziert, einen ansteigenden Ast (12) bei niedrigen Drehzahlen und einen abfallenden Ast (11) bei hohen Drehzahlen aufweist, **dadurch gekennzeichnet, dass**
sich ein Arbeitspunkt am Schnittpunkt der Motorkennlinie (12) mit einer für die Leistungsaufnahme von Antrieb und Häckselwerk repräsentativen Geraden (13) ergibt, wenn der Motor (1) mit Volllast arbeitet,
dass bei einer lokal verringerten Bestandsdichte des Erntegutes weniger Leistung im Häckselwerk erforderlich ist, so dass der Leistungsbedarf abnimmt, die Steigung der Geraden abnimmt, und sich der Arbeitspunkt zu höheren Drehzahlen verschiebt, und
dass wenn bei Betrieb des Motors (1) bei dem der maximalen Leistung entsprechenden Wert des Steuerparameters die Drehzahl einen ersten oberen Grenzwert (ω_{max,0}) überschreitet, ein erster, einer von Null verschiedenen reduzierten Leistung entsprechender Wert (T₁(ω)) des Steuerparameters (T) eingestellt wird.

2. Verfahren nach Anspruch 1, **dadurch gekennzeichnet, dass** der erste einer reduzierten Leistung entsprechende Wert (T₁(ω)) des Steuerparameters eine Funktion der Motordrehzahl (ω) ist, und dass die Funktion vorgegeben ist, um eine Abnahme der Motorleistung (P) bei steigender Drehzahl (ω) zu realisieren.

3. Verfahren nach Anspruch 1 oder 2, **dadurch gekennzeichnet, dass** wenn im Betrieb mit dem ersten reduzierten Wert (T₁(ω)) des Steuerparameters ein erster unterer Grenzwert (ω_{min,1}) der Drehzahl unterschritten wird, der der maximalen Leistung entsprechende Wert des Steuerparameters eingestellt wird.

4. Verfahren nach einem der vorhergehenden Ansprüche, **dadurch gekennzeichnet, dass** wenn im Betrieb mit dem n-ten Wert (Tₙ(ω)) des Steuerparameters ein n+1-ter oberer Grenzwert (ω_{max,n}) der Drehzahl überschritten wird, ein n+1-ter einer reduzierten Leistung entsprechender Wert (Tₙ₊₁(ω)) des Steuerparameters eingestellt wird, wobei n jeden ganzzahligen Wert zwischen 1 und einer Obergrenze annehmen kann und die dem n+1-ten Wert des Steuerparameters entsprechende Leistung niedriger als die dem n-ten Wert entsprechende ist.

5. Verfahren nach einem der vorhergehenden Ansprüche, **dadurch gekennzeichnet, dass** wenn im Betrieb mit dem n+1-ten Wert (Tₙ₊₁(ω)) des Steuerparameters ein n+1-ter unterer Grenzwert (ω_{min,n+1}) der Drehzahl unterschritten wird, der n-te einer reduzierten Leistung entsprechende Wert (Tₙ(ω)) des Steuerparameters eingestellt wird, wobei n jeden ganzzahligen Wert zwischen 1 und einer Obergrenze annehmen kann.

6. Verfahren nach einem der Ansprüche 3 bis 5, **dadurch gekennzeichnet, dass** bei gleicher Motordrehzahl (ω) die Differenz zwischen der Leistung des Motors bei maximaler Leistung entsprechendem Wert des Steuerparameters und beim ersten reduzierter Leistung entsprechenden Wert (T₁(ω)) und/oder die Differenz zwischen der Leistung des Motors beim n-ten Wert (Tₙ(ω)) und beim n+1-ten Wert (Tn+₁(ω)) des Steuerparameters wenigstens 10 kW beträgt.

7. Verfahren nach einem der Ansprüche 3 bis 6, **dadurch gekennzeichnet, dass** der n-te untere Grenzwert (ω_{min,n}) maximal 90% des n+1-ten oberen Grenzwerts (ω_{max,n}) beträgt.

8. Verfahren nach einem der vorhergehenden Ansprüche, **dadurch gekennzeichnet, dass** der Steuerparameter das von dem Motor erzeugte Drehmoment ist.

9. Steuergerät für einen Verbrennungsmotor, **dadurch gekennzeichnet, dass** es eingerichtet ist, das Verfahren nach einem der vorhergehenden Ansprüche auszuführen.

10. Steuergerät nach Anspruch 9, **dadurch gekennzeichnet, dass** es eingerichtet ist, mit dem Verbrennungsmotor gemäß der Norm SAE J1939 zu kommunizieren.

11. Landwirtschaftliche Maschine mit einem Verbrennungsmotor (1) und einem Steuergerät (9) dafür nach Anspruch 9 oder 10.

12. Computerprogrammprodukt mit Programmcode-Mitteln zum Ausführen des Verfahrens nach einem der Ansprüche 1 bis 8 auf einem Mikroprozessor eines Motorsteuergeräts.

13. Computerlesbarer Datenträger, **dadurch gekennzeichnet, dass** auf ihm Programmanweisungen aufgezeichnet sind, die einen Computer befähigen, das Verfahren nach einem der Ansprüche 1 bis 8 auszuführen.

## Claims

1. A method of operating an internal combustion engine (1) of a self-propelled agricultural machine including a travel drive and a chopping mechanism, wherein the output power of the internal combustion engine (1) can be determined by way of a control parameter (T), wherein an engine characteristic curve (11, 12) which at a value of the control parameter (T), that corresponds to a maximum output power, specifies the output power (P) as a function of the engine rotary speed (ω), has an ascending limb (12) at low rotary speeds and a descending limb (11) at high rotary speeds, **characterised in that**
there is an operating point at the point of intersection of the engine characteristic curve (12) with a straight line (13) representative of the power consumption of the drive and the chopping mechanism when the engine (13) is operating at full load,
less power is required in the chopping mechanism in the case of a locally reduced stand density so that the power requirement decreases, the slope of the straight line decreases and the operating point shifts to higher rotary speeds and
when in operation of the engine (1) at the value of the control parameter, that corresponds to the maximum output power, the rotary speed exceeds a first upper limit value (ω_{max,0}) a first value (T₁(ω)) of the control parameter (T) is set, that corresponds to a reduced output power different from zero.

2. A method according to claim 1 **characterised in that** the first value (T₁(ω)) of the control parameter that corresponds to a reduced output power is a function of the engine rotary speed (ω) and the function is preset in order to obtain a decrease in engine output power (P) as the rotary speed (ω) rises.

3. A method according to claim 1 or claim 2 **characterised in that** when in operation with the first reduced value (T₁(ω)) of the control parameter the rotary speed falls below a first lower limit value (ω_{min,1}) the value of the control parameter, that corresponds to the maximum output power, is set.

4. A method according to one of the preceding claims **characterised in that** when in operation with the nth value (Tₙ(ω)) of the control parameter an n+1th upper limit value (ω_{max,n}) of the rotary speed is exceeded an n+1th value (Tₙ₊₁(ω)) of the control parameter, that corresponds to a reduced output power, is set, wherein n assume any whole-number value between 1 and an upper limit and the output power corresponding to the n+1th value of the control parameter is lower than that corresponding to the nth value.

5. A method according to one of the corresponding claims **characterised in that** when in operation with the n+1th value (Tₙ₊₁(ω)) of the control parameter the rotary speed falls below an n+1th lower limit value (ω_{min,n+1}) the nth value (Tₙ(ω)) of the control parameter, that corresponds to a reduced output power, is set, wherein n may assume any whole-number value between 1 and an upper limit.

6. A method according to one of claims 3 to 5 **characterised in that** at the same engine rotary speed (ω) the difference between the output power of the engine at the value of the control parameter, that corresponds to the maximum output power and at the first value (T₁(ω)) that corresponds to reduced output power and/or the difference between the output power of the engine at the nth value (Tₙ(ω)) of the control parameter and at the n+1th value (Tₙ₊₁(ω)) of the control parameter is at least 10 kW.

7. A method according to one of claims 3 to 6 **characterised in that** the nth lower limit value (ω_{min,n}) is at a maximum 90% of the n+1th upper limit value (ω_{max,n}).

8. A method according to one of the preceding claims **characterised in that** the control parameter is the torque generated by the engine.

9. A control device for an internal combustion engine **characterised in that** it is adapted to carry out the method according to one of the preceding claims.

10. A control device according to claim 9 **characterised in that** it is adapted to communicate with the internal combustion engine in accordance with standard SAE J1939.

11. An agricultural machine having an internal combustion engine (1) and a control device for same according to claim 9 or claim 10.

12. A computer program product having program code means for carrying out the method according to one of claims 1 to 8 on a microprocessor of an engine control device.

13. A computer-readable data carrier **characterised in that** recorded thereon are program instructions which enable a computer to carry out the method according to one of claims 1 to 8.

## Revendications

1. Procédé de fonctionnement d'un moteur à combustion interne (1) d'une machine agricole automotrice qui comprend un groupe propulseur et un système de hachage, la puissance du moteur à combustion interne (1) étant déterminable par l'intermédiaire d'un paramètre de commande (T), une courbe caractéristique de moteur (11, 12), qui à une valeur du paramètre de commande (T) correspondant à une puissance maximale spécifie la puissance (P) en fonction du régime-moteur (ω), présentant une branche ascendante (12) à bas régime et une branche descendante (11) à haut régime, **caractérisé en ce qu'**un point de travail s'établit au point d'intersection de la courbe caractéristique de moteur (12) avec une droite (13) représentative de la puissance absorbée par la propulsion et par le système de hachage lorsque le moteur (1) travaille à pleine charge, **en ce qu'**en cas de moindre densité locale de produit récolté, moins de puissance est requise dans le système de hachage, de sorte que la puissance nécessaire diminue, la pente des droites diminue et le point de travail se décale vers des régimes supérieurs, et **en ce que** si, en cas de fonctionnement du moteur (1) à une valeur du paramètre de commande correspondant à la puissance maximale, le régime surpasse une première valeur limite supérieure (ω_{max,0}), une première valeur (T₁(ω)) du paramètre de commande (T), laquelle correspond à une puissance réduite différente de zéro, est établie.

2. Procédé selon la revendication 1, **caractérisé en ce que** la première valeur (T₁(ω)) du paramètre de commande, laquelle correspond à une puissance réduite, est une fonction du régime-moteur (ω), et **en ce que** la fonction est prédéfinie pour réaliser une diminution de la puissance moteur (P) à régime croissant (ω).

3. Procédé selon la revendication 1 ou 2, **caractérisé en ce que** si, lors du fonctionnement avec la première valeur réduite (T₁(ω)) du paramètre de commande, une première valeur limite inférieure (ω_{min,1}) du régime est soupassée, la valeur du paramètre de commande correspondant à la puissance maximale est établie.

4. Procédé selon une des revendications précédentes, **caractérisé en ce que** si, lors du fonctionnement avec la n-ième valeur (Tₙ(ω)) du paramètre de commande, une n+1-ième valeur limite supérieure (ω_{max,n}) du régime est surpassée, une n+1-ième valeur (Tₙ₊₁(ω)) du paramètre de commande correspondant à une puissance réduite est établie, n pouvant accepter toute valeur entière entre 1 et une limite supérieure, et la puissance correspondant à la n+1-ième valeur du paramètre de commande étant inférieure à celle correspondant à la n-ième valeur.

5. Procédé selon une des revendications précédentes, **caractérisé en ce que** si, lors du fonctionnement avec la n+1-ième valeur (Tₙ₊₁(ω)) du paramètre de commande, une n+1-ième valeur limite inférieure (ω_{min,n+1}) du régime est soupassée, la n-ième valeur (Tₙ(ω)) du paramètre de commande correspondant à une puissance réduite est établie, n pouvant accepter toute valeur entière entre 1 et une limite supérieure.

6. Procédé selon une des revendications 3 à 5, **caractérisé en ce qu'**à régime-moteur (ω) identique, la différence entre la puissance du moteur à une valeur du paramètre de commande correspondant à une puissance maximale et à une valeur (T₁(ω)) correspondant à une puissance réduite et/ou la différence entre la puissance du moteur à la n-ième valeur (Tₙ(ω)) et à la n+1-ième valeur (Tₙ₊₁(ω)) du paramètre de commande est égale à au moins 10 kW.

7. Procédé selon une des revendications précédentes 3 à 6, **caractérisé en ce que** la n-ième valeur limite inférieure (ω_{min,n}) est égale au maximum à 90 % de la n+1-ième valeur limite supérieure (ω_{max,n}).

8. Procédé selon une des revendications précédentes, **caractérisé en ce que** le paramètre de commande est le couple de rotation généré par le moteur.

9. Appareil de commande pour un moteur à combustion interne, **caractérisé en ce qu'**il est agencé pour mettre en oeuvre le procédé selon une des revendications précédentes.

10. Appareil de commande selon la revendication 9, **caractérisé en ce qu'**il est agencé pour communiquer avec le moteur à combustion interne selon la norme SAE J1939.

11. Machine agricole comprenant un moteur à combustion interne (1) et un appareil de commande (9) correspondant selon la revendication 9 ou 10.

12. Produit de programme informatique avec des moyens de code de programme pour mettre en oeuvre le procédé selon une des revendications 1 à 8 sur un microprocesseur d'un appareil de commande de moteur.

13. Support de données lisible par ordinateur, **caractérisé en ce que** sur celui-ci sont enregistrées des instructions qui permettent à un ordinateur de mettre en oeuvre le procédé selon une des revendications 1 à 8.
